# EUROPEAN PATENT APPLICATION

(11) **EP 3 439 348 A1**
(43) Date of publication of application: **06.02.2019**
(21) Application number: 17775343.1
(22) Date of filing: 30.03.2017
(51) Int. Cl.: H04W 16/14, H04W 72/04, H04W 74/08

(54) **USER TERMINAL, WIRELESS BASE STATION, AND WIRELESS COMMUNICATION METHOD**

(30) Priority: 31.03.2016 JP 2016073410
(71) Applicant: NTT DOCOMO, INC., Chiyoda-ku Tokyo 100-6150 (JP)
(72) Inventor: HARADA, Hiroki, Tokyo 100-6150 (JP); NAGATA, Satoshi, Tokyo 100-6150 (JP); WANG, Lihui, Beijing 100190 (CN); LIU, Liu, Beijing 100190 (CN); JIANG, Huiling, Beijing 100190 (CN)
(74) Representative: Hoffmann Eitle
(86) International application number: PCT/JP2017/013131
(87) International publication number: WO 2017/170809

(57) **Abstract**

According to the present invention, adequate communication can be carried out in a communication system using cells where application of listening is stipulated. A transmission section that transmits uplink control information in a predetermined UL channel and a control section that controls UL transmission based on UL listening applied before UL transmission are provided, and the control section controls the conditions for UL listening and the UL channel occupation period, which is configured after UL listening, depending on the type of the UL channel.

## Description

### Technical Field

The present invention relates to a user terminal, a radio base station and a radio communication method in a next-generation mobile communication system.

### Background Art

In the UMTS (Universal Mobile Telecommunications System) network, the specifications of long term evolution (LTE) have been drafted for the purpose of further increasing high speed data rates, providing lower delays and so on (see non-patent literature 1). Furthermore, the specifications of LTE-advanced (Rel. 10 to 12) have been drafted for the purpose of achieving further broadbandization and higher speeds beyond LTE, and, in addition, for example, a successor system of LTE -- referred to as "5G" (5th generation mobile communication system) -- is under study.

The specifications of LTE of Rel. 8 to 12 have been drafted assuming exclusive operations in frequency bands that are licensed to communications providers (operators) (also referred to as "licensed CCs" (or "licensed bands")). As licensed CCs, for example, 800 MHz, 1.7 GHz and 2 GHz are used.

In recent years, user traffic has been increasing steeply following the spread of high-performance user terminals (UE: User Equipment) such as smart-phones and tablets. Although more frequency bands need to be added to accommodate this increasing user traffic, licensed CCs have limited spectra (licensed spectra).

Consequently, a study is in progress with Rel. 13 LTE to enhance the frequencies of LTE systems by using bands of unlicensed spectra (also referred to as "unlicensed CCs" (or "unlicensed bands")) that are available for use apart from licensed CCs (see non-patent literature 2). For unlicensed CCs, for example, the 2.4 GHz band and the 5 GHz band, where Wi-Fi (registered trademark) and Bluetooth (registered trademark) can be used, are under study for use.

To be more specific, Rel. 13 LTE is presently under study to apply carrier aggregation (CA) between licensed CCs and unlicensed CCs. In this way, communication that is performed by using unlicensed CCs together with licensed CCs is referred to as "LAA" (License-Assisted Access). Note that, in the future, dual connectivity (DC) between licensed CCs and unlicensed CCs and stand-alone (SA) of unlicensed CCs may become the subject of study under LAA.

### Citation List

### Non-Patent Literature

Non-Patent Literature 1: 3GPP TS 36.300 "Evolved Universal Terrestrial Radio Access (E-UTRA) and Evolved Universal Terrestrial Radio Access Network (E-UTRAN); Overall Description; Stage 2"
Non-Patent Literature 2: AT&T, Drivers, Benefits and Challenges for LTE in Unlicensed Spectrum, 3GPP TSG-RAN Meeting #62 RP-131701

### Summary of Invention

### Technical Problem

For unlicensed CCs, a study is in progress to introduce interference control functionality in order to allow co-presence with other operators' LTE, Wi-Fi and/or other systems. In Wi-Fi, LBT (Listen Before Talk), which is based on CCA (Clear Channel Assessment), is used as an interference control function for use within the same frequency.

Consequently, even when unlicensed CCs are configured in LTE systems, UL transmission and/or DL transmission may be controlled by applying "listening" (for example, LBT) as an interference control function. In this case, efficient and fair co-presence with other systems and other operators is required. Listening that is performed prior to transmission is also referred to as "channel access procedures."

When transmission is controlled by applying listening, whether or not to perform transmission and/or the timing of transmission are changed based on the result of listening that is performed before transmission. For example, when a user terminal transmits a UL signal in response to a DL signal received from a radio base station, in an unlicensed CC, the user terminal may be unable to transmit this UL signal for a long time, depending on the result of UL listening.

Meanwhile, if the transmission of signals that are important in communication, such as uplink control information, including delivery acknowledgment signals (HARQ-ACK) used in DL retransmission control, is severely limited by listening, communication may not be performed properly.

The present invention has been made in view of the forgoing, and it is therefore an object of the present invention to provide a user terminal, a radio base station and a radio communication system, whereby adequate communication can be carried out in a communication system using cells where application of listening is stipulated).

### Solution to Problem

According to one aspect of the present invention, a user terminal has a transmission section that transmits uplink control information in a predetermined UL channel, and a control section that controls UL transmission based on UL listening applied before UL transmission are provided, and, in this user terminal, the control section controls the conditions for UL listening and the UL channel occupation period, which is configured after UL listening, depending on the type of the UL channel.

### Advantageous Effects of Invention

According to the present invention, adequate communication can be carried out in a communication system using cells where application of listening is stipulated.

### Brief Description of Drawings

FIGs. 1A and 1B are diagrams to show examples of communication methods using channel access procedures;
FIG. 2 is a diagram to show an example of applying random backoff;
FIGs. 3A and 3B are diagrams to show examples of UL listening operations according to a first embodiment of the present invention;
FIG. 4 is a diagram to show an example of applying category 4 to DL-LBT according to a first aspect of the present invention;
FIG. 5 is a diagram to show examples of short TTIs according to the first aspect;
FIGs. 6A and 6B are diagrams to show channel access operations in which users are multiplexed in the same subframe of the same unlicensed CC;
FIGs. 7A and 7B are diagrams to show examples of applying category 2 to both DL listening and UL listening;
FIGs. 8A and 8B are diagrams to show examples of applying category 2 to DL listening and applying category 4 to UL listening;
FIG. 9 is a diagram to show an example of applying category 2 to DL listening and applying category 4 to UL listening in a subframe configuration with short TTIs;
FIG. 10 is a diagram to show an example of reporting a UL grant based on cross-carrier scheduling;
FIG. 11 is a diagram to show an example of a schematic structure of a radio communication system according to the present embodiment;
FIG. 12 is a diagram to show an example of an overall structure of a radio base station according to the present embodiment;
FIG. 13 is a diagram to show an example of a functional structure of a radio base station according to the present embodiment;
FIG. 14 is a diagram to show an example of an overall structure of a user terminal according to the present embodiment;
FIG. 15 is a diagram to show an example of a functional structure of a user terminal according to the present embodiment; and
FIG. 16 is a diagram to show an example hardware structure of a radio base station and a user terminal according to one embodiment of the present invention.

### Description of Embodiments

In systems that run LTE/LTE-A in unlicensed CCs (for example, LAA systems), interference control functionality is likely to be necessary in order to allow co-presence with other operators' LTE, Wi-Fi and/or other systems. In this case, efficient and fair co-presence with other systems and other operators is required. Note that systems that run LTE/LTE-A in unlicensed CCs may be collectively referred to as "LAA," "LAA-LTE," "LTE-U," "U-LTE" and so on, regardless of whether the mode of operation is CA, DC or SA.

Generally speaking, when a transmission point (for example, a radio base station (eNB), a user terminal (UE) and so on) that communicates by using a carrier (which may also be referred to as a "carrier frequency," or simply a "frequency") of an unlicensed CC detects another entity (for example, another user terminal) that is communicating using this unlicensed CC's carrier, the transmission point is disallowed to make transmission in this carrier.

Therefore, the transmission point performs "listening" (LBT: Listen Before Talk) at a timing a predetermined period before a transmission timing. To be more specific, by executing LBT, the transmission point searches the whole of the target carrier band (for example, one component carrier (CC)) at a timing that is a predetermined period before a transmission timing, and checks whether or not there are other pieces of apparatus (for example, radio base stations, user terminals, Wi-Fi apparatus and so on) communicating in this carrier band.

Note that "listening" refers to the operation which a given transmission point (for example, a radio base station, a user terminal and so on) performs before transmitting signals in order to check whether or not signals to exceed a predetermined level (for example, predetermined power) are being transmitted from other transmission points. Furthermore, listening that is performed by radio base stations and/or user terminals may be referred to as "channel access procedures," "LBT," "CCA" (Clear Channel Assessment), "carrier sensing" and so on.

The transmission point then carries out transmission using this carrier only if it is confirmed that no other apparatus is communicating. If the received power measured during LBT (the received signal power during listening period) is equal to or lower than a predetermined threshold, the transmission point judges that the channel is in the idle state (LBT_{idle}), and carries out transmission. When a "channel is in the idle state," this means that, in other words, the channel is not occupied by a specific system, and it is equally possible to say that a channel is "idle," a channel is "clear," a channel is "free," and so on.

On the other hand, if only just a portion of the target carrier band is detected to be used by another piece of apparatus, the transmission point stops its transmission. For example, if the transmission point detects that the received power of a signal from another piece of apparatus in this band exceeds a predetermined threshold, the transmission point judges the channel is in the busy state (LBT_{busy}), and makes no transmission. In the event LBT_{busy} is yielded, LBT is carried out again with respect to this channel, and the channel becomes available for use only after the idle state is confirmed. Note that the method of judging whether a channel is in the idle state/busy state based on LBT is by no means limited to this.

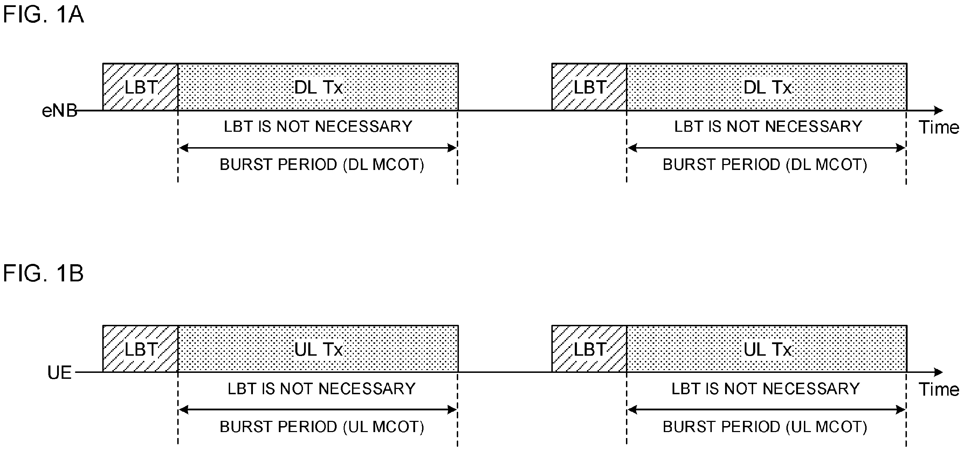

FIGs. 1 show examples of communication methods using channel access procedures. FIG. 1A shows DL communication, and FIG. 1B shows UL communication.

In DL communication, when the result of listening (DL-LBT) performed by a radio base station before DL transmission indicates "LBT-idle," a period during which DL transmission to skip LBT (DL burst transmission) is allowed can be configured (FIG. 1A). The period during which transmission is allowed without performing LBT after listening (in the event of LBT-idle) is also referred to as "DL maximum channel occupancy time" (DL MCOT), "channel occupancy time," "burst period" (burst transmission period, burst length, maximum burst length, maximum possible burst length, etc.) and so on.

In UL communication, when the result of listening (UL-LBT) performed by a user terminal before UL transmission indicates "LBT-idle," a period during which UL transmission to skip LBT (UL burst transmission) is allowed can be configured(FIG. 1B). The period during which transmission is permitted without performing LBT after listening (in the event of LBT-idle) is also referred to as "UL maximum channel occupancy time" (UL MCOT), "channel occupancy time," "burst period" (burst transmission period, burst length, maximum burst length, maximum possible burst length, etc.) and so on.

As described above, by introducing interference control that is based on LBT mechanism in LAA systems, it becomes possible to prevent interference between LAA and Wi-Fi, interference between LAA systems and so on. Furthermore, even when transmission points are controlled independently per operator that runs an LAA system, LBT makes it possible to reduce interference without learning the details of each operator's control.

Meanwhile, when the LBT mechanism is introduced in LAA systems, fair co-presence with other systems (for example, Wi-Fi) and other LTE operators is required.

For the purpose of ensuring fair co-presence with other systems and other operators, it may be possible to apply random backoff to listening even when LTE/LTE-A systems are used in unlicensed CCs. Random backoff refers to the mechanism by which, even when a channel enters the idle state, each transmission point does not start transmission immediately, but defers transmission for a randomly configured period of time (counter value), and starts transmission when the channel is clear.

For example, if a channel is in a busy state in an unlicensed CC, each transmission point (access point) starts transmitting data when the channel is judged to be in the idle state by means of listening. In this case, if multiple transmission points waiting for the channel to enter the idle state start transmitting simultaneously, there is a high possibility that collisions will occur between the transmission points. Therefore, for the purpose of preventing collisions between transmission points, even when the channel enters the idle state, each transmission point does not transmit immediately and defers transmission for a randomly configured period, thereby reducing the possibility of collisions between the transmission points (random backoff).

The backoff period that is configured in each transmission point can be determined based on a counter value that is configured on a random basis (random value). The range of counter values is determined based on the contention window (CW) size, and, for example, the counter value for random backoff is configured randomly out of the range from 1 to the CW size (integer value).

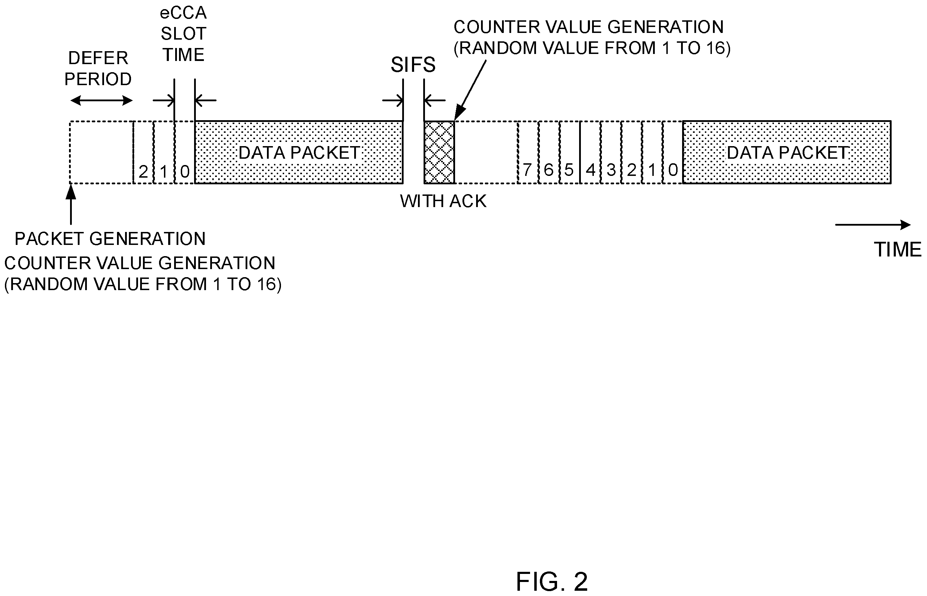

FIG. 2 shows an example of applying random backoff. A transmission point generates a counter value for random backoff when a channel is judged to be in the idle state based on CCA. Then, the counter value is held until it can be confirmed that the channel has been idle for a predetermined period of waiting time (also referred to as "defer period" (D_eCCA)). When it is successfully confirmed that the channel has been idle for a predetermined period of time, the transmission point performs sensing in a predetermined time unit (for example, an eCCA slot time unit), and the transmission point can lower the counter value if the channel is idle and perform transmission when the counter value becomes zero.

In random backoff, the counter value is determined from a range that is associated with the CW size. FIG. 2 shows a case where random values are selected, from among 1 to 16, as the backoff period. In this way, by controlling transmission based on the counter values for random backoff in listening, it is possible to distribute the opportunities for transmission among a plurality of transmission points and guarantee fairness.

Even when LTE systems are used in unlicensed CCs, it may be possible to apply random backoff to the listening that is performed by transmission points (radio base stations and/or user terminals) before UL transmission and/or DL transmission, as in Wi-Fi.

However, when LBT is applied to UL transmission, the transmission of important signals such as UCI (Uplink Control Information) is severely limited (transmission delays and so on). This leads to a decrease in throughput and so on, which then makes proper communication difficult.

Therefore, the present inventors have focused on applying changing LBT condition, which are used upon listening (LBT) when UCI and/or other signals are transmitted in unlicensed CCs. For example, the condition for UL listening and the UL channel occupation period, which is configured after UL listening, are controlled depending on the type of UL channel. For example, for LBT that is applied to DL communication, category 2, to which random backoff does not apply, and category 4, to which random backoff applies, are set forth. For UL communication, too, a first listening condition (corresponding to category 2), in which random backoff is not applied to UL listening (UL-LBT) that is executed before UL transmission, and a second listening condition (corresponding to category 4), in which random backoff is applied to UL listening, may be set forth. The first listening condition (category 2) may be seen as a channel access operation with a shorter sensing period than the second listening condition (category 4).

To be more specific, when the PUCCH is used in UL communication of UCI, the first listening condition (no random backoff) is applied to UL-LBT, and UL-MCOT is limited to a predetermined period of time (for example, 1 ms or 2 ms). In this way, the first listening condition is applied to UL-LBT that is performed before UCI is transmitted in the PUCCH, so that it is possible to improve the chance the UCI will be transmitted successfully, and, meanwhile, short UL-MCOT, which limits UL-MCOT to a predetermined period of time, is employed, so that fairness with other transmission points can be secured.

Also, when using the PUSCH in UL communication of UCI, a user terminal performs UL listening based on the LBT condition reported from a radio base station. The LBT condition reported from the radio base station can be determined depending on the condition for DL listening that is performed in the radio base station before a UL grant, which indicates PUSCH transmission, is transmitted. To be more specific, when the condition for DL listening corresponds to category 4 (with random backoff), the first listening condition (no random backoff) is determined as the LBT condition for executing UL listening. Also, when the condition for DL listening corresponds to category 2 (no random backoff), the second listening condition (with random backoff) is determined as the LBT condition for executing UL listening. When the second listening condition is applied to UL listening, short UL-MCOT, which further limits UL-MCOT to a predetermined period of time, can be applied. The second listening condition may include a parameter for limiting the length of the defer period to a short time, and a CW size for limiting the back-off period to a short period of time. Also, although the LBT condition for executing UL listening is the first listening condition (no random backoff), the first listening condition (with random backoff) is determined as the LBT condition for executing UL listening. At this time, short UL-MCOT, which limits UL-MCOT to a predetermined period of time, is applied.

In addition, when cross-carrier scheduling is used, a UL grant that indicates PUSCH transmission may be transmitted from a cell not using DL listening. When a UL grant is transmitted from a cell not using DL listening, the second listening condition (with random backoff) is determined as the LBT condition for executing UL listening. When applying the second listening condition to the UL listening, short UL-MCOT, which further limits UL-MCOT to a predetermined period of time, can be used. The second listening condition may include a parameter for limiting the length of the defer period to a short time, and a CW size for limiting the back-off period to a short period of time.

### (First Embodiment)

If the PUCCH is supported in a cell (for example, an unlicensed CC) that executes listening, uplink control information can be transmitted via the PUCCH. In this case, the first listening condition without random backoff is applied to the UL listening for transmitting the uplink control information in the PUCCH. The uplink control information may be at least one piece of UCI (for example, a scheduling request specified by 3GPP, HARQ ACK/NACK, CQI, CSI, etc.).

When applying the first listening condition (category 2) to UL-LBT, short UL-MCOT, which is limited to a short period of time, is used for UL-MCOT. Further, in UL communication in unlicensed CCs, the PUSCH may be transmitted with the PUCCH. For example, the period for transmitting the PUSCH can be adjusted with UL-MCOT that is configured for a UCI-transmitting PUCCH. By this means, the PUSCH can be transmitted based on one UL listening that is performed for PUCCH transmission.

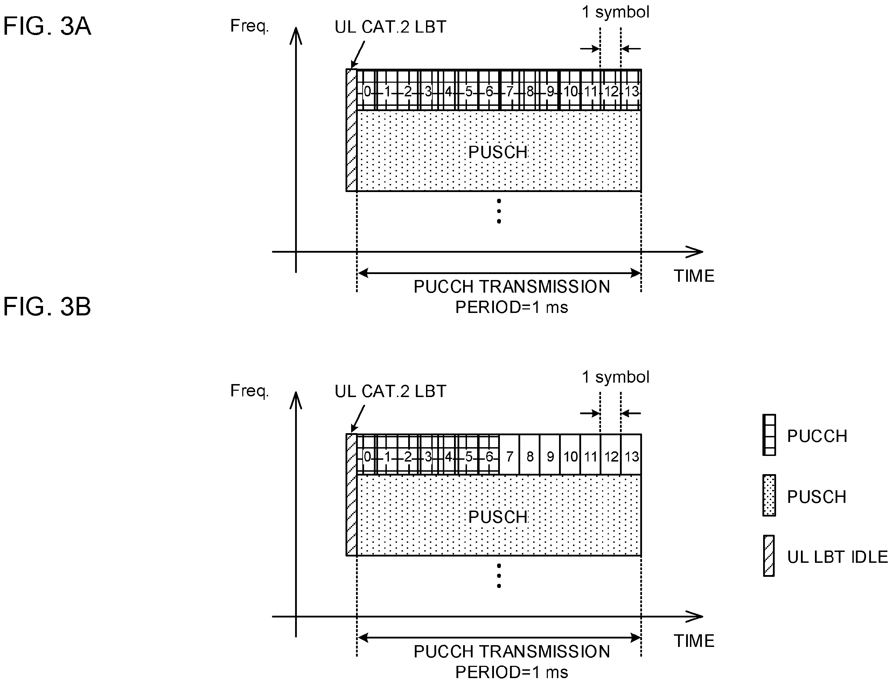

FIG. 3 shows an example of UL-LBT that is executed when UCI is transmitted via the PUCCH in an unlicensed CC. FIG. 3A shows a case in which normal TTIs are used, and FIG. 3B shows a case in which short TTIs are used.

As shown in FIG. 3A, when UCI is transmitted via the PUCCH in an unlicensed CC, the first listening condition (for example, category 2 (UL Cat. 2 LBT)) without random backoff period is applied to UL-LBT. When transmitting UCI via the PUCCH in an unlicensed CC, the user terminal performs UL listening based on the first listening condition. To be more specific, if the channel of the unlicensed CC is in the idle state for a predetermined period (defer period), random backoff is not applied after the predetermined period is over, and UL-MCOT is configured so that the UCI can be transmitted in the PUCCH.

When the first listening condition is applied to UL-LBT, short UL-MCOT, which limits UL-MCOT to a short period of time (for example, 1 ms), is configured. UCI is transmitted in the PUCCH during UL-MCOT.

In this way, when UCI is transmitted in the PUCCH, the first listening condition without random backoff period is used for UL-LBT, so that it is possible to transmit the UCI, which is important signals, with a high rate of success. In addition, short UL-MCOT is selected as UL-MCOT for the PUCCH, and the transmission period is limited to a short period of 1 ms or 2 ms, so that other transmission points can have transmission opportunities after the short UL-MCOT, and fairness can be ensured.

Also, in FIG. 3A, the user terminal transmits the PUSCH in parallel with the PUCCH. The end of PUSCH transmission is adjusted with the end of UL-MCOT, which is provided for PUCCH transmission. By this means, UL-MCOT that is provided for PUCCH transmission can be used for PUSCH transmission, so that, when the PUCCH and the PUSCH are transmitted in parallel, it is not necessary to execute UL-LBT separately.

FIG. 3B shows an example in which the first listening condition (no random backoff) is applied to UL-LBT that is performed before UCI is transmitted in the PUCCH, and in which, furthermore, one TTI is a short TTI that is formed with seven SC-FDMA symbols. UL-MCOT for PUCCH transmission is short UL-MCOT, which corresponds to fourteen symbols (1 ms). The short TTI is used for PUCCH transmission of UCI with a small amount of data, and the normal TTI (fourteen symbols) is used for PUSCH transmission where the amount of data is assumed to be larger than UCI.

### (Second Embodiment)

If an unlicensed CC does not support the PUCCH, the user terminal transmits UCI using the PUSCH. For example, the user terminal can transmit the PUSCH including UCI in response to a UL grant reported from a radio base station. Alternatively, even when an unlicensed CC supports the PUCCH, there is a possibility that UCI is transmitted via the PUSCH at timings (for example, subframes) where UL data is transmitted. When the radio base station transmits a UL grant in an unlicensed CC, the radio base station performs DL listening before the transmission. The radio base station determines the listening condition to apply to UL listening to perform before transmitting the PUSCH, depending on the listening condition applied to DL listening performed before the transmission of the UL grant. The radio base station introduces the mechanism for reporting the determined listening condition to the user terminal together with the UL grant. Now, the first aspect to the third aspect of the present invention, in which UCI is transmitted in the PUSCH in unlicensed CCs, will be described below. Although cases will be shown in the following description where categories 2 and 4 are applied as listening conditions, this is not limiting.

### (First Aspect)

When the second listening condition (category 4) with random backoff is applied to DL-LBT performed before the radio base station transmits a UL grant, the first listening condition (category 2) without random backoff is applied to UL-LBT that is performed before the PUSCH is transmitted in response to the UL grant. When the first listening condition (category 2) is applied to UL-LBT, for UL-MCOT, for example, a short UL-MCOT, which is limited to a short transmission period of 1 ms or 2 ms, is specified.

If the PUCCH is not supported in an unlicensed CC, signals such as UCI are transmitted in the PUSCH. In LTE and LTE-Advanced, prior to PUSCH transmission, the radio base station transmits a UL grant in the downlink. The radio base station can select the listening condition to apply to DL-LBT, which the radio base station performs before transmitting the UL grant, from the second listening condition (category 4) with random backoff and the first listening condition (category 2) without random backoff.

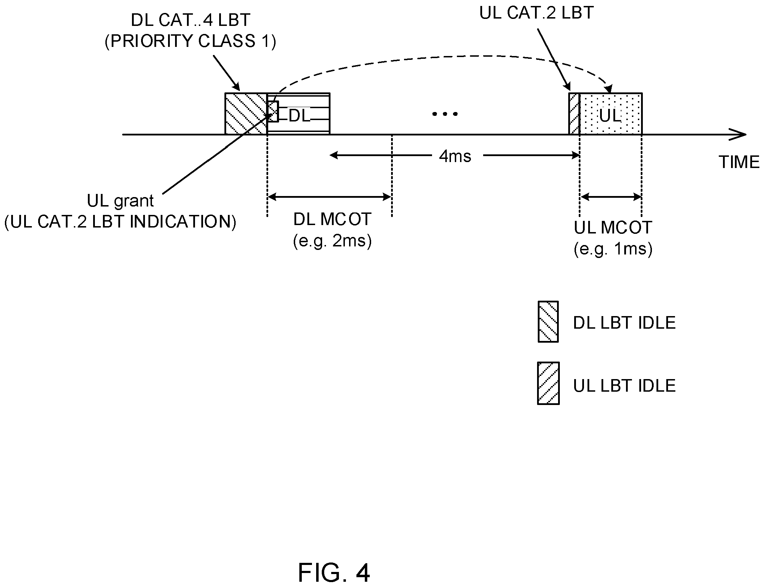

As shown in FIG. 4, if the radio base station applies the second listening condition (DL Cat. 4 LBT) to the DL listening performed before the transmission of the UL grant, the first listening condition (UL Cat. 2 LBT) is reported as the listening condition to apply to UL listening, together with the UL grant. In response to this UL grant, the user terminal transmits UCI in the PUSCH. The user terminal transmits the PUSCH a predetermined period after the UL grant is transmitted (for example, 4 ms later).

Based on the listening condition reported from the radio base station, the user terminal applies the first listening condition (UL Cat. 2 LBT) without random backoff to the UL listening which the user terminal executes before transmitting the PUSCH. When the user terminal applies the first listening condition without random backoff, the UL-MCOT is reduced to a short UL-MCOT such as 1 ms. Information about the constraints of UL-MCOT may also be reported from the radio base station, along with the listening condition. By this means, when the PUSCH is transmitted in response to a UL grant, the listening condition for the UL listening that is performed before the UL grant is transmitted is decided by taking into account the listening condition that has been applied to DL listening, so that it is possible to keep the overall idle period equal between DL communication and UL communication.

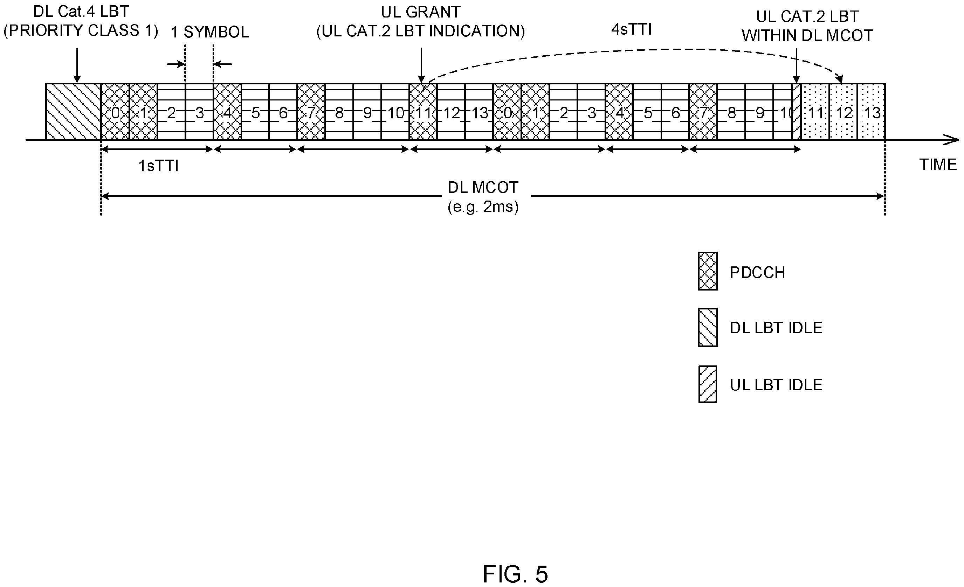

When short TTIs are introduced in LAA, the delay time from the transmission of a UL grant to the transmission of the PUSCH may be four sTTIs, not 4 ms. This increases the possibility that the user terminal will start UL listening during the DL-MCOT period that is provided to transmit the UL grant. FIG. 5 shows example of short TTIs (sTTIs), where one subframe is formed with three or four OFDM symbols.

The second listening condition (category; DL Cat. 4 LBT) is applied to the DL listening that is performed before the UL grant is transmitted, and the DL-MCOT is configured to 2 ms. Based on the listening condition reported from the radio base station, the user terminal applies the first listening condition (UL Cat. 2 LBT) without random backoff to the UL listening that is performed before the PUSCH is transmitted. In FIG. 5, a UL grant and the UL listening condition are included in the DL signal transmitted in the eleventh symbol in the DL-MCOT period. The user terminal starts transmitting the PUSCH after a delay of four sTTIs from the transmission of the UL grant. In this case, UL listening is carried out and the PUSCH starts being transmitted during the DL-MCOT period (2 ms).

For example, referring to FIG. 5, when the DL-MCOT is configured to 2 ms, the UL-MCOT may be set to a period within the DL-MCOT. The DL-MCOT is a period that can be occupied between the radio base station and the user terminal. Therefore, even if the user terminal uses this DL-MCOT period for UL transmission, the impact on other transmission points is small. The user terminal configures the period of the termination of the DL-MCOT of 2 ms as UL-MCOT and transmits the UL signal (PUSCH) including the UCI. In FIG. 5, a UL-MCOT of a three-symbol period is configured, and the PUSCH transmits UCI alone, or UCI and user data.

Note that the UL-MCOT does not necessarily have to have a length that fits within DL-MCOT. For example, a short UL-MCOT (for example, 1 ms) can be configured as well. When a short UL-MCOT is applied, although the UL-MCOT does not stay within the DL-MCOT period, the UL-MCOT ends in a short time, so that the impact on other transmission points can be reduced.

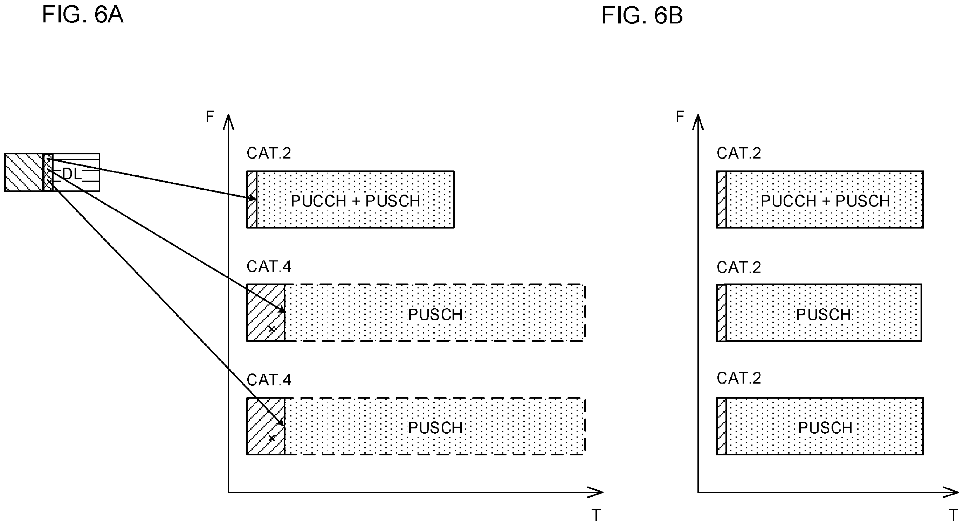

When the first listening condition is applied to the UL listening that is performed before the PUCCH (or the PUCCH and the PUSCH) is transmitted, another user terminal that transmits the PUSCH alone may be scheduled in the same subframe of the same unlicensed CC. In this case, if the other user terminal performs UL-LBT using the second listening condition, a deficiency may occur where FDM-based simultaneous multiplexed transmission cannot be performed (see FIG. 6A). If, while a user terminal that applies the first listening condition to UL listening is engaged in PUCCH transmission (PUSCH transmission), another user terminal applies the second listening condition to UL listening for PUSCH transmission in the same subframe, the UL transmission by the user terminal using the first listening condition is still in progress, so that the result of LBT by the user terminal using the second listening condition shows the busy state.

Therefore, a structure may be employed here in which, as shown in FIG. 6B, when the first listening condition is applied to UL listening in a given user terminal and another PUSCH-transmitting user terminal is scheduled in the same subframe of the same unlicensed CC, the first listening condition is applied to the other user terminal, instead of the second listening condition. Moreover, a short UL-MCOT, which is limited to a short period of time, is configured for UL-MCOT.

To be more specific, the radio base station commands the first listening condition for UL listening before PUSCH transmission in a given user terminal. In this case, if another user terminal to transmit the PUSCH is scheduled in the same subframe of the same unlicensed CC, the radio base station commands the first listening condition (in some cases, a short UL-MCOT) to the other user terminal. Based on the command from the radio base station, the other user terminal, multiplexed by FDM, employs the first listening condition, and a short UL-MCOT, limited to a short period of time, is configured for UL-MCOT.

### (Second Aspect)

Now, a mechanism is introduced here which, when the radio base station applies the first listening condition to the DL listening that is performed before a UL grant is transmitted, allows the user terminal to select either the first listening condition or the second listening condition as the listening condition to apply to the UL listening that is performed before the user terminal transmits the PUSCH. When applying the first listening condition to UL listening, the user terminal configures the UL-MCOT to a short UL-MCOT, which is 1 ms and so on.

Also, when applying the second listening condition to UL listening, the user terminal applies a short defer period, a small CW size, a short UL-MCOT and so on to the UL listening. Since there is random backoff in the second listening condition, there is a high possibility that the delay time becomes longer than the first listening condition. Therefore, a short defer period, a small CW size and so on are chosen in order to keep the listening period short. In the case of using the second listening condition, the listening condition to apply to UL listening can be indirectly commanded by reporting the number of the lower priority class to the user terminal. Alternatively, a short defer period, a small CW size, a short UL-MCOT and so on may be directly reported to the user terminal as parameters related to UL listening, without using the number of the priority class.

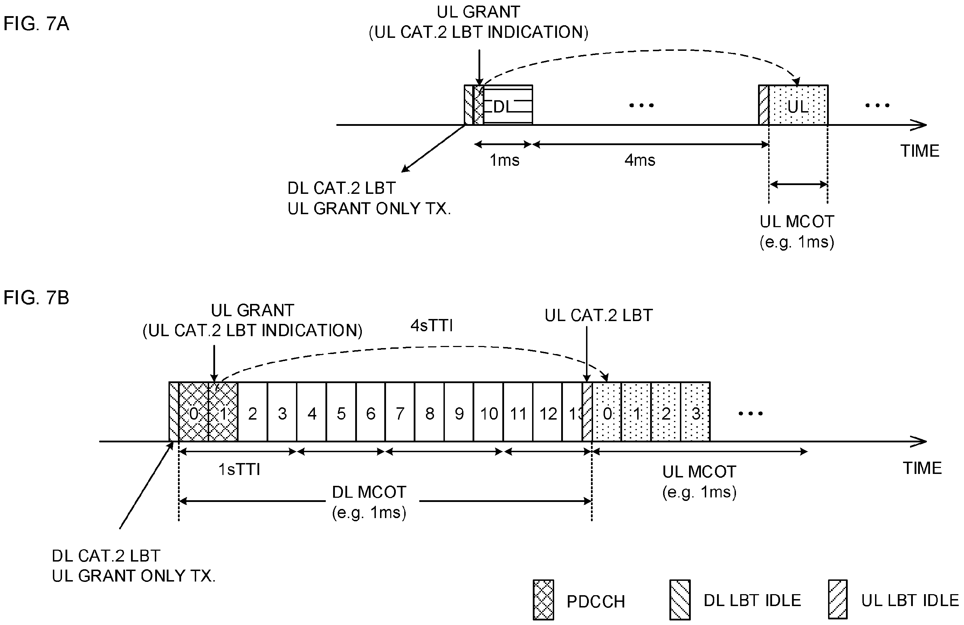

FIGs. 7A and 7B show examples in which category 2 is applied to both DL-LBT upon UL grant transmission and UL-LBT upon UCI transmission.

In the example shown in FIG. 7A, in a subframe configuration with normal TTIs, the first listening condition (DL Cat. 2 LBT) is applied to the DL listening before the UL grant is transmitted, and the first listening condition (UL Cat. 2 LBT) is applied to the UL listening before the PUSCH is transmitted. The radio base station applies the first listening condition to the DL listening before the UL grant is transmitted. 4 ms after the radio base station transmits the UL grant, the user terminal, having received the UL grant, transmits UCI (or UCI and user data) in the PUSCH. The radio base station transmits a DL signal including the listening condition (first listening condition) for UL listening together with the UL grant. The user terminal transmits UCI, in the PUSCH, in response to the UL grant. At this time, the user terminal performs UL listening based on the first listening condition commanded by the DL signal.

Also, when the first listening condition is applied, a short UL-MCOT (which is, for example, 1 ms) is configured for PUSCH transmission. The user terminal transmits UCI (or UCI and user data) in the PUSCH, from an unlicensed CC, in the short UL-MCOT period. As described above, while the first listening condition is applied to the DL listening that is executed before a UL grant is transmitted, and the first listening condition is applied to the UL listening that is executed before the PUSCH is transmitted in response to the UL grant, so that UCI can be transmitted with a high chance of success. In addition, since a short UL-MCOT (for example, 1 ms) is configured as a UL-MCOT for transmitting UL signals including UCI via the PUSCH, a carrier can be released early.

In the example shown in FIG. 7B, in a subframe configuration with short TTIs (sTTI), the first listening condition (DL Cat. 2 LBT) is applied to the DL listening before the UL grant is transmitted, and the first listening condition (UL Cat. 2 LBT) is applied to the UL listening before the PUSCH is transmitted. In the short TTIs, one subframe is formed with three or four OFDM symbols. The radio base station applies the first listening condition to the DL listening before transmitting the UL grant. Four TTIs after the radio base station transmits the UL grant, the user terminal transmits UCI (or UCI and user data) in the PUSCH in response to the UL grant.

As shown in FIG. 7B, if the DL-MCOT is 1 ms and the UL grant is transmitted in the first symbol in of the DL-MCOT, the next symbol following the last symbol of the DL-MCOT comes after a delay four sTTIs at the shortest. From there, a UL-MCOT is started, and the UCI is included in the PUSCH signal and transmitted. As described above, the radio base station transmits the DL signal including the listening condition (first listening condition) for UL listening together with the UL grant.

The user terminal applies the first listening condition to the UL listening based on the listening condition specified in the DL signal. When using the first listening condition, the user terminal configures a short UL-MCOT (which is, for example, 1 ms), and transmits UCI (or UCI and user data) from an unlicensed CC in the PUSCH in the short UL-MCOT period. In this way, by introducing short TTIs (sTTIs) to the subframe configuration, it is possible to shorten the period from the transmission of a UL grant until the transmission of the PUSCH including UCI.

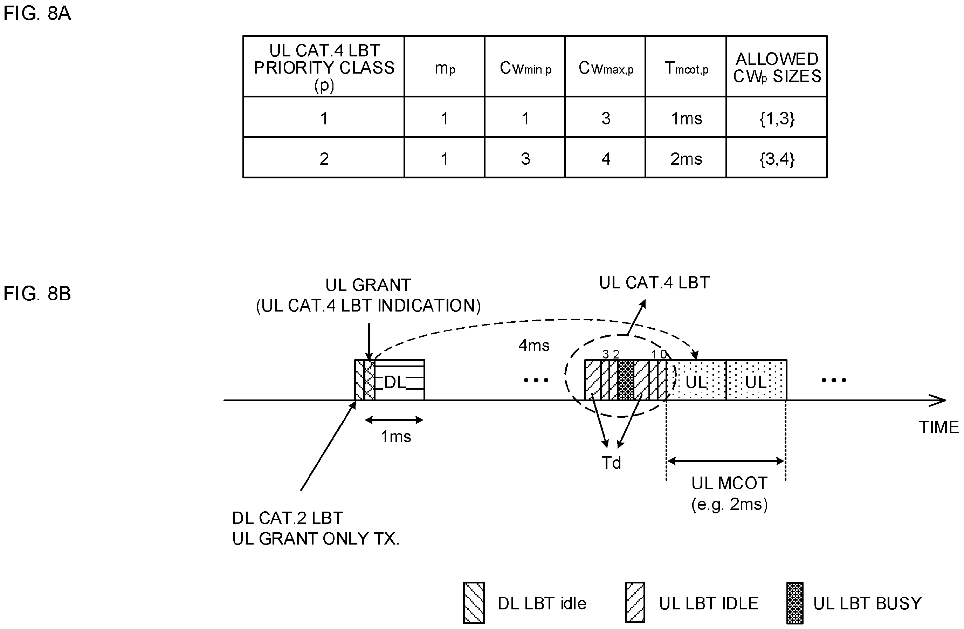

Referring to FIGs. 8A and 8B, examples in which the first listening condition (DL Cat. 2 LBT) is applied to the DL listening before a UL grant is transmitted and the second listening condition (UL Cat. 4 LBT) is applied to the UL listening before UCI is transmitted in response to the UL grant will be described.

FIG. 8A shows a parameter table that relates to the second listening condition (UL Cat. 4 LBT) to apply to the UL listening performed before the PUSCH is transmitted. In this parameter table, a plurality of parameters that determine the listening period and the MCOT period are configured in association with priority classes. In the parameter table, the continuous slot period (mₚ), the maximum CW (CW_{max,p}), the minimum CW (CW_{min,p}), and the CW size (Allowed CWp sizes) are set forth as parameters for determining the listening period. In addition, the MCOT period (T_{MCOT,p}) is specified as a parameter to determine the length of MCOT.

In priority class 1, parameters that minimize the listening period and the MCOT period are configured, whereas, in priority class 2, parameters that make the listening period and MCOT period longer than in priority class 1 are set forth. After these, the longer listening periods and MCOT periods can be set forth following the increase of the priority class number (p). To be more specific, the listening period includes a predetermined defer period and a random backoff period. The length of the defer period changes depending on the number of slots constituting the parameter (mₚ).

As shown in the parameter table of FIG. 8A, by configuring the parameter (mₚ) to 1, which is the minimum number of slots, the defer period becomes the minimum time (for example, 25 µs). Also, the time duration of the random backoff period changes depending on the CW size (Allowed CWp sizes). When either the maximum CW (CW_{max,p}) or the minimum CW (CW_{min,p}) assumes an increased numerical value, there is a high possibility that the random backoff period will be longer. As shown in the parameter table of FIG. 8A, by configuring the maximum CW (CW_{max,p}) or minimum CW (CW_{min,p}) to a small numerical value (for example, 1, 3, etc.), it is possible to suppress the random backoff period to a short period of time.

FIG. 8B shows an example in which the first listening condition (DL Cat. 2 LBT) is applied to the DL listening before a UL grant is transmitted, and the second listening condition (UL Cat. 4 LBT) is applied to the UL listening before UCI is transmitted in response to the UL grant. The radio base station applies the first listening condition to DL listening when transmitting a UL grant. The user terminal, receiving this UL grant, starts UL listening a predetermined period (for example, 4 ms) of time after the radio base station transmits the UL grant, in order to transmit UCI (or UCI and user data) in the PUSCH. The radio base station transmits a DL signal including the listening condition together with the UL grant. The listening condition for UL listening is determined according to the category that is applied to DL-LBT.

To be more specific, when the first listening condition is applied to DL-LBT, the second listening condition is applied to the UL listening for transmitting UCI in response to this UL grant. When the second listening condition is commanded in the DL signal in which the UL grant is transmitted, a priority class (priority class 1 or priority class 2) to realize a short UL listening period and a short UL-MCOT period (for example, 1 ms or 2 ms) is included in the DL signal as a UL-LBT condition.

In the example shown in FIG. 8B, priority class 2 is commanded as a UL-LBT condition. To be more specific, in priority class 2: the defer period parameter (mₚ) is 1, so that one slot time (=25 µs) is commanded as the defer period; the CW sizes are 3 and 4, so that, for example, CW=3 is commanded; and T_{MCOT,p} is 2 ms, so that UL-MCOT=2 ms is commanded. Note that the UL listening condition to be included in a DL signal may be parameters (mₚ, CW, T_{MCOT,p}, and others), instead of a priority class.

After a delay of 4 ms following the receipt of the UL grant, the user terminal starts UL listening in order to transmit UCI in the PUSCH. The listening condition to apply to the UL listening that is executed for PUSCH transmission is reported in the DL signal along with the UL grant. When the priority is reported as the listening condition, the user terminal determines the defer period, the CW sizes and the UL-MCOT based on the saved parameter table (FIG. 8A).

The user terminal starts UL listening, and, for example, if priority 2 is reported, the user terminal holds the counter value until it can be confirmed that the channel has been idle for defer period Td. When it is confirmed that the channel has been idle for a period of Td, sensing is conducted with respect to a predetermined time unit (for example, an eCCA slot time unit), and the counter value is lowered if the channel is idle, and a UL MCOT is configured and PUSCH transmission is carried out when the counter value becomes zero.

In the example shown in FIG. 8B, since the busy state is detected after the counter value is decremented to 2, it is confirmed again that the channel is idle over the defer period Td. The user terminal transmits a UL signal including UCI (or UCI and user data), during the UL-MCOT period, using the PUSCH. Note that, when transmitting UCI alone, it is possible to configure the UL-MCOT period to a short UL-MCOT (for example, 1 ms), which is even shorter, and, when transmitting user data in addition to UCI, it is also possible to configure the UL-MCOT period as commanded (for example, 2 ms).

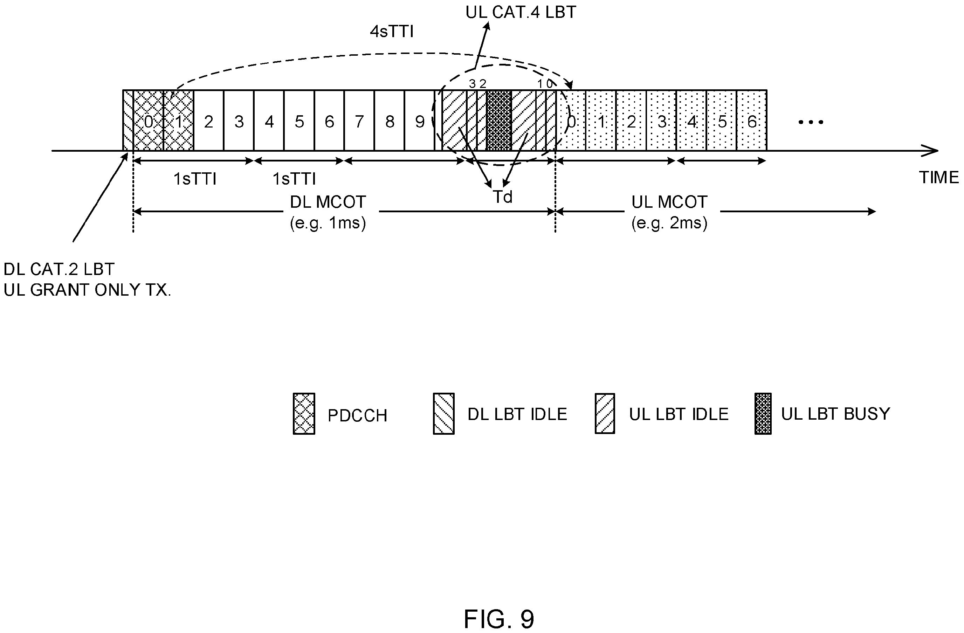

FIG. 9 shows an example, in which, in a subframe configuration with short TTIs (sTTIs), the first listening condition (DL Cat. 2 LBT) is applied to the DL listening for transmitting a UL grant, and the second listening condition (UL Cat. 4 LBT) is applied to the UL listening for transmitting UCI. The radio base station determines the listening condition to apply to the UL listening depending on the category that is applied to the DL listening.

To be more specific, when category 2 is applied to DL-LBT, the second listening condition is applied to UL listening when UCI is transmitted in response to the UL grant. Furthermore, when the second listening condition is commanded, a priority class (priority class 1 or priority class 2) to realize a short UL listening period and a short UL-MCOT period (for example 1 ms or 2 ms) is commanded as a listening condition for UL listening.

The user terminal starts UL-LBT after a delay of four sTTIs following the receipt of the UL grant, in order to transmit UCI in the PUSCH. If the DL-MCOT is 1 ms, the UL-LBT after a delay of four sTTIs is started during the DL-MCOT period. The UL-MCOT may be outside the DL-MCOT period, as shown in FIG. 9.

### (Third Aspect)

When a UL grant is reported in cross-carrier scheduling (licensed CC), the user terminal employs the second listening condition as the listening condition to apply to the UL listening that is performed before PUSCH communication. The radio base station does not execute DL-LBT when transmitting a UL grant in a licensed CC, so that the radio base station commands the user terminal to use the second listening condition with random backoff when the user terminal transmits a UL signal in response to that UL grant.

In this way, when a UL grant is transmitted, DL-LBT is not used, and, instead, the second listening condition with random backoff is used when the PUSCH is sent in response to that UL grant. By this means, it is possible to control the listening operation time in the UCI transmission stage by taking into consideration the listening operation time in the downlink.

In the event the second listening condition is commanded to the user terminal, a short UL listening period may be specified for the second listening condition. The radio base station transmits a DL signal including a UL grant and the listening condition for UL listening, in a licensed CC. As the listening condition for UL listening, the second listening condition is commanded, and priority class 1 (or priority class 2) is commanded. As shown in FIG. 8A, priority class 1 (or priority class 2) is associated with parameters that configure a short UL listening period and a short UL-MCOT period (mp, CW, TMCOT,p, etc.). The user terminal receives the UL grant and the listening condition for UL listening via the licensed CC.

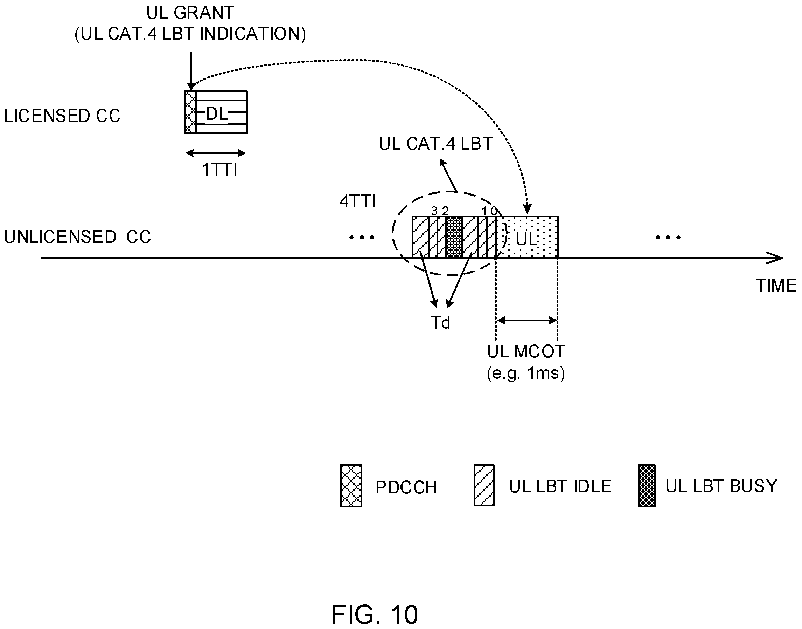

FIG. 10 shows an example in which a UL grant is reported in cross-carrier scheduling (licensed CC). The radio base station transmits the UL grant from the licensed CC to the user terminal, and, in response to the UL grant, the user terminal transmits UCI to the radio base station via the unlicensed CC. Since the radio base station does not need to use DL-LBT in the licensed CC, the radio base station does not execute DL-LBT when transmitting a UL grant.

The radio base station includes the listening condition for UL listening in the DL signal in which a UL grant is transmitted. This listening condition includes an indication of the second listening condition (UL Cat. 4 LBT), and indications of a short UL listening period and a short UL-MCOT. Indications of a short UL listening period and a short UL-MCOT may be reported in the form of priority class 1 (or priority class 2). Upon transmitting the PUSCH in response to a UL grant, the user terminal performs UL listening based on the listening condition (UL Cat. 4 LBT) reported from the radio base station.

Note that, although the above description has illustrated transmission of uplink control information (UCI), the present embodiment is not limited to this. The present invention is equally applicable to other uplink signals (for example, PRACH (Physical Random Access Channel), uplink reference signal, etc.).

### (Radio Communication System)

Now, the structure of a radio communication system according to one embodiment of the present invention will be described below. In this radio communication system, each radio communication method according to the above-described embodiments is employed. Note that the radio communication method according to each embodiment may be used alone or may be used in combination.

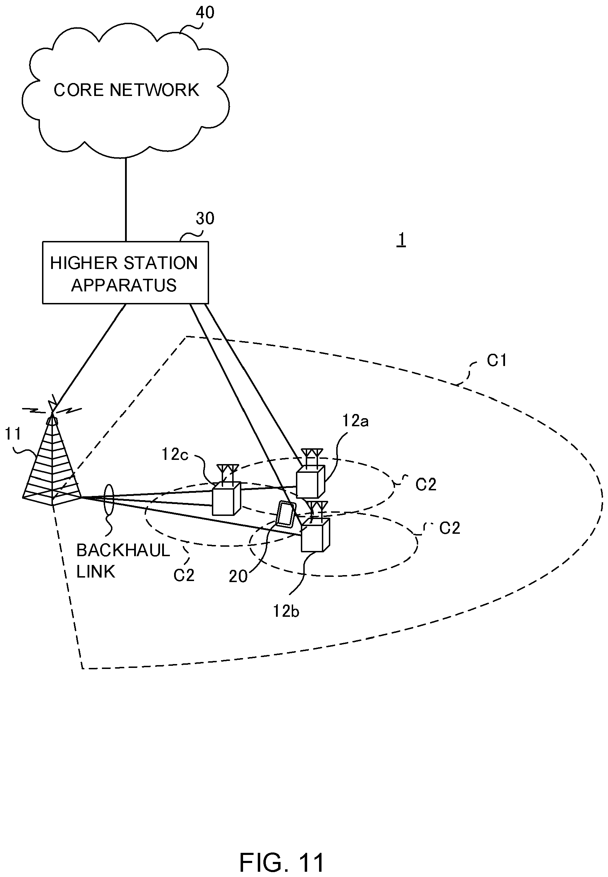

FIG. 11 is a diagram to show an example of a schematic structure of a radio communication system according to one embodiment of the present invention. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit. Note that the radio communication system 1 may be referred to as "SUPER 3G," "LTE-A" (LTE-Advanced), "IMT-Advanced," "4G," "5G," "FRA" (Future Radio Access) and so on.

The radio communication system 1 shown in FIG. 11 includes a radio base station 11 that forms a macro cell C1, and radio base stations 12a to 12c that form small cells C2, which are placed within the macro cell C1 and which are narrower than the macro cell C1. Also, user terminals 20 are placed in the macro cell C1 and in each small cell C2. A configuration in which different numerologies are applied between cells may be adopted. Note that "numerology" refers to a set of communication parameters that characterize the design of signals in a given RAT and the design of the RAT.

The user terminals 20 can connect with both the radio base station 11 and the radio base stations 12. The user terminals 20 may use the macro cell C1 and the small cells C2, which use different frequencies, at the same time, by means of CA or DC. Also, the user terminals 20 can execute CA or DC by using a plurality of cells (CCs) (for example, six or more CCs). Furthermore, the user terminals can use license band CCs and unlicensed band CCs as a plurality of cells. In DL communication and UL communication using unlicensed CCs, the above-described listening conditions are applied as appropriate. In addition, when cross-carrier scheduling using a licensed CC and an unlicensed CC is executed, the radio base station 11 transmits a UL grant and the listening condition via DL communication from the licensed CC, and, the user terminal 20 transmits UCI in the PUCCH or the PUSCH from the unlicensed CC, the above-described listening conditions are applied to UL listening.

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz and so on) and a wide bandwidth may be used, or the same carrier as that used in the radio base station 11 may be used. Note that the configuration of the frequency band for use in each radio base station is by no means limited to these.

A structure may be employed here in which wire connection (for example, means in compliance with the CPRI (Common Public Radio Interface) such as optical fiber, the X2 interface and so on) or wireless connection is established between the radio base station 11 and the radio base station 12 (or between two radio base stations 12).

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. Also, the radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals or stationary communication terminals.

In the radio communication system 1, as radio access schemes, OFDMA (Orthogonal Frequency Division Multiple Access) is applied to the downlink, and SC-FDMA (Single-Carrier Frequency Division Multiple Access) is applied to the uplink. OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to these combinations, and OFDMA may be used in the uplink.

In the radio communication system 1, a downlink shared channel (PDSCH: Physical Downlink Shared CHannel), which is used by each user terminal 20 on a shared basis, a broadcast channel (PBCH: Physical Broadcast CHannel), downlink L1/L2 control channels and so on are used as downlink channels. User data, higher layer control information and SIBs (System Information Blocks) are communicated in the PDSCH. Also, the MIB (Master Information Block) is communicated in the PBCH.

The downlink L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI), including PDSCH and PUSCH scheduling information, is communicated by the PDCCH. The number of OFDM symbols to use for the PDCCH is communicated by the PCFICH. HARQ delivery acknowledgement signals (ACK/NACK) in response to the PUSCH are communicated by the PHICH. The EPDCCH is frequency-division-multiplexed with the PDSCH (downlink shared data channel) and used to communicate DCI and so on, like the PDCCH.

In the radio communication system 1, an uplink shared channel (PUSCH: Physical Uplink Shared CHannel), which is used by each user terminal 20 on a shared basis, an uplink control channel (PUCCH: Physical Uplink Control CHannel), a random access channel (PRACH: Physical Random Access CHannel) and so on are used as uplink channels. User data, higher layer control information and so on are communicated by the PUSCH. Uplink control information (UCI: Uplink Control Information), including at least one of delivery acknowledgment information (ACK/NACK) and radio quality information (CQI), is transmitted by the PUSCH or the PUCCH. By means of the PRACH, random access preambles for establishing connections with cells are communicated.

### <Radio Base Station>

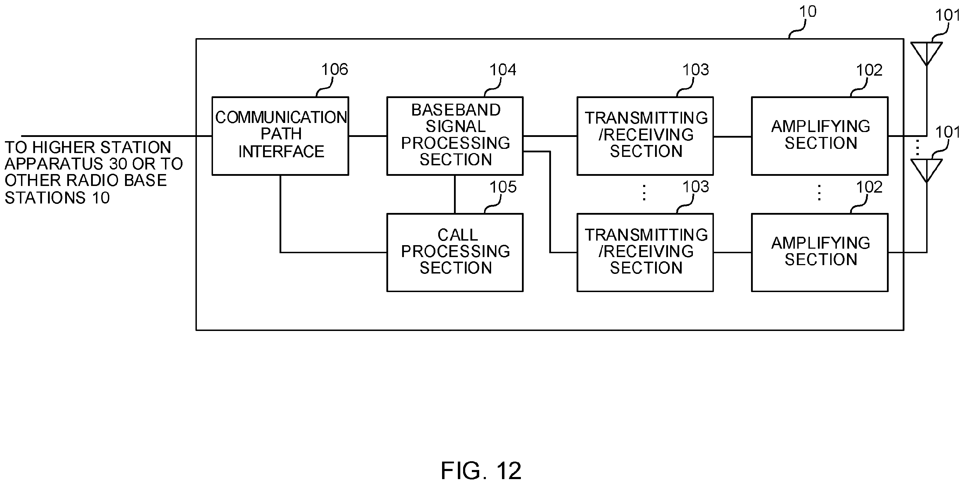

FIG. 12 is a diagram to show an example of an overall structure of a radio base station according to one embodiment of the present invention. A radio base station 10 has a plurality of transmitting/receiving antennas 101, amplifying sections 102, transmitting/receiving sections 103, a baseband signal processing section 104, a call processing section 105 and a communication path interface 106. Note that the transmitting/receiving sections 103 are comprised of transmitting sections and receiving sections.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to transmission processes, including a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving sections 103. Furthermore, downlink control signals are also subjected to transmission processes such as channel coding and an inverse fast Fourier transform, and forwarded to the transmitting/receiving sections 103.

Baseband signals that are pre-coded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101.

The transmitting/receiving sections (receiving sections) 103 receive uplink control information and uplink data transmitted from the user terminals. For example, the transmitting/receiving sections (receiving sections) 103 receive uplink control information (UCI) in an uplink shared channel (for example, an LAA SCell), where transmission is controlled based on the result of listening. As uplink channels, uplink control channels and/or uplink shared channels for other cells (for example, licensed CCs) can be used. The transmitting/receiving sections (transmission sections) 103 transmit DL signals (for example, a UL grant) to the user terminals.

The transmitting/receiving sections 103 can be constituted by transmitters/receivers, transmitting/receiving circuits or transmitting/receiving apparatus that can be described based on general understanding of the technical field to which the present invention pertains. Note that a transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (such as setting up and releasing communication channels), manages the state of the radio base stations 10 and manages the radio resources.

The communication path interface section 106 transmits and receives signals to and from the higher station apparatus 30 via a predetermined interface. Also, the communication path interface 106 may transmit and/or receive signals (backhaul signaling) with other radio base stations 10 via an inter-base station interface (for example, an interface in compliance with the CPRI (Common Public Radio Interface), such as optical fiber, the X2 interface, etc.).

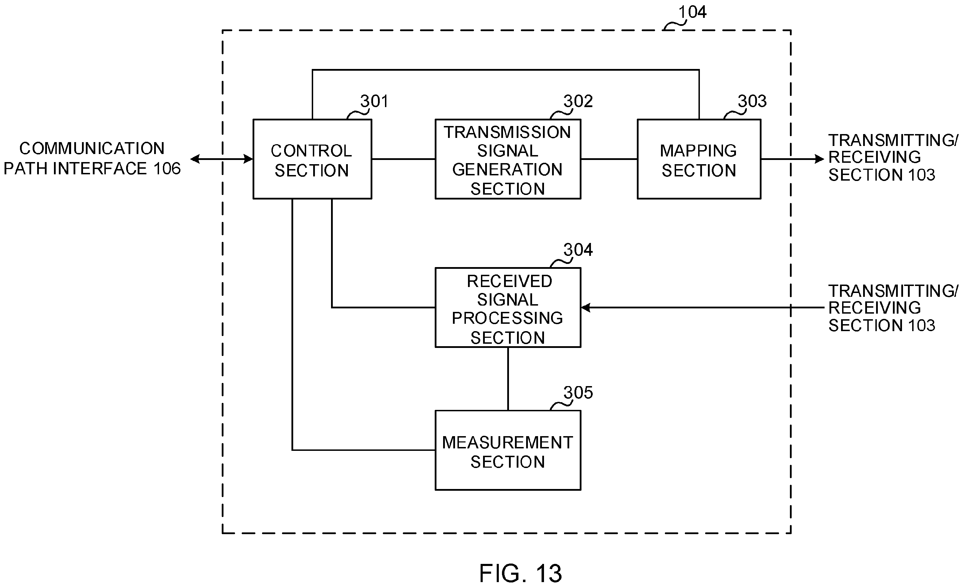

FIG. 13 is a diagram to show an example of a functional structure of a radio base station according to the present embodiment. Note that, although FIG. 10 primarily shows functional blocks that pertain to characteristic parts of the present embodiment, the radio base station 10 has other functional blocks that are necessary for radio communication as well. As shown in FIG. 13, the baseband signal processing section 104 has a control section (scheduler) 301, a transmission signal generating section (generating section) 302, a mapping section 303, a received signal processing section 304 and a measurement section 305.

The control section (scheduler) 301 controls the whole of the radio base station 10. Note that, when a licensed band and an unlicensed band are scheduled with 1 control section (scheduler) 301, the control section 301 controls communication in licensed band cells and unlicensed band cells. For the control section 301, a controller, a control circuit or control apparatus that can be described based on common understanding of the technical field to which the present invention pertains can be used.

The control section 301, for example, controls the generation of downlink signals in the transmission signal generation section 302, the allocation of downlink signals by the mapping section 303, and so on. Furthermore, the control section 301 controls the signal receiving processes in the received signal processing section 304, the measurements of signals in the measurement section 305, and so on.

The control section 301 controls the scheduling, generation, mapping, transmission and the like of downlink signals (system information, DCI-transmitting PDCCH/EPDCCH, PDSCH, downlink reference signals, synchronization signals, etc.). Furthermore, the control section 301 controls LBT (listening) by the measurement section 305, and controls the transmission signal generation section 302 and the mapping section 303 to transmit downlink signals depending on the result of LBT. Furthermore, the control section 301 controls the scheduling, reception and the like of uplink signals (PUSCH, PUCCH, PRACH, uplink reference signals, etc.).

In addition, the control section 301 determines the listening condition to apply to the UL listening that is performed before the PUSCH is transmitted, based on the listening condition that has been applied to DL listening prior to transmission of a UL grant. The control section 301 reports the determined listening condition to the user terminal 20 together with a UL grant. To be more specific, when applying the second listening condition (category 4) with random backoff is to the DL-LBT that is performed before transmitting a UL grant, the user terminal decides to apply the first listening condition (category 2) without random backoff to the UL-LBT that is executed before the PUSCH is transmitted in response to that UL grant. When the first listening condition (category 2) is applied to UL-LBT, the UL-MCOT is decided to be a short UL-MCOT, which is limited to a short transmission period of 1 ms or 2 ms.

In addition, when the first listening condition is applied to the DL listening that is performed before a UL grant is transmitted, either the first listening condition or the second listening condition is selected as the listening condition to apply to UL listening. To be more specific, when the first listening condition is applied to DL listening before UL grant is transmitted, the first listening condition is applied to the UL listening that is performed before the PUSCH is transmitted in response to that UL grant, and, furthermore, a short UL-MCOT (1 ms) is reported so as to provide a UL-MCOT for transmitting a UL signal including UCI via the PUSCH.

Also, when the first listening condition is applied to DL-LBT, the control section 301 commands that the second listening condition be applied to UL listening when UCI is transmitted in response to that UL grant. To be more specific, when the second listening condition is specified in the DL signal in which the DL signal is transmitted, control is exerted so that a priority class (priority class 1 or priority class 2) to realize a short UL listening period and a short UL-MCOT period (for example 1 ms or 2 ms) is reported to the user terminal 20 as a UL-LBT condition. Furthermore, if a UL grant is reported in cross-carrier scheduling (licensed CC), a report to the effect that the second listening condition should be used as the listening condition to apply to UL listening is sent to the user terminal 20.

The control section 301 can control transmission and receipt in the transmitting/receiving sections (transmission sections) 103. For example, the control section 301 controls the receipt of user terminal uplink control information and uplink data. For the control section 301, a controller, a control circuit or control apparatus that can be described based on common understanding of the technical field to which the present invention pertains can be used.

The transmission signal generation section 302 generates DL signals (downlink control signals, downlink data signals, downlink reference signals and so on) based on commands from the control section 301, and outputs these signals to the mapping section 303. To be more specific, the transmission signal generation section 302 generates a downlink data signal (PDSCH) including user data, and outputs it to the mapping section 303. Furthermore, the transmission signal generation section 302 generates a downlink control signal (PDCCH/EPDCCH) including DCI (UL grant), and outputs it to the mapping section 303. Furthermore, the transmission signal generation section 302 generates downlink reference signals such as CRS and CSI-RS, and outputs them to the mapping section 303.

The mapping section 303 maps the DL signals generated in the transmission signal generation section 302 to predetermined radio resources based on commands from the control section 301, and outputs these to the transmitting/receiving sections 103. For the mapping section 303, mapper, a mapping circuit or a mapping device that can be described based on common understanding of the technical field to which the present invention pertains can be used.

The received signal processing section 304 performs receiving processes (for example, demapping, demodulation, decoding and so on) of received signals that are input from the transmitting/receiving sections 103. Here, the received signals are, for example, uplink signals transmitted from the user terminals 20. For the received signal processing section 304, a signal processor, a signal processing circuit or signal processing apparatus that can be described based on general understanding of the technical field to which the present invention pertains can be used.

The received signal processing section 304 outputs the decoded information acquired through the receiving processes to the control section 301. For example, when a PUCCH to contain an HARQ-ACK is received, the received signal processing section 304 outputs this HARQ-ACK to the control section 301. Also, the received signal processing section 304 outputs the received signals, the signals after the receiving processes and so on, to the measurement section 305.

The measurement section 305 conducts measurements with respect to the received signals. The measurement section 305 can be constituted by a measurer, a measurement circuit or measurement apparatus that can be described based on general understanding of the technical field to which the present invention pertains.

The measurement section 305 executes LBT in a carrier where LBT is configured (for example, in an unlicensed band) based on a command from the control section 301, and outputs the result of LBT (for example, judgment as to whether the channel state is idle or busy) to the control section 301.

Also, the measurement section 305 may measure the received power (for example, RSRP (Reference Signal Received Power)), the received quality (for example, RSRQ (Reference Signal Received Quality)), the channel states and so on of the received signals. The measurement results may be output to the control section 301.

### <User Terminal>

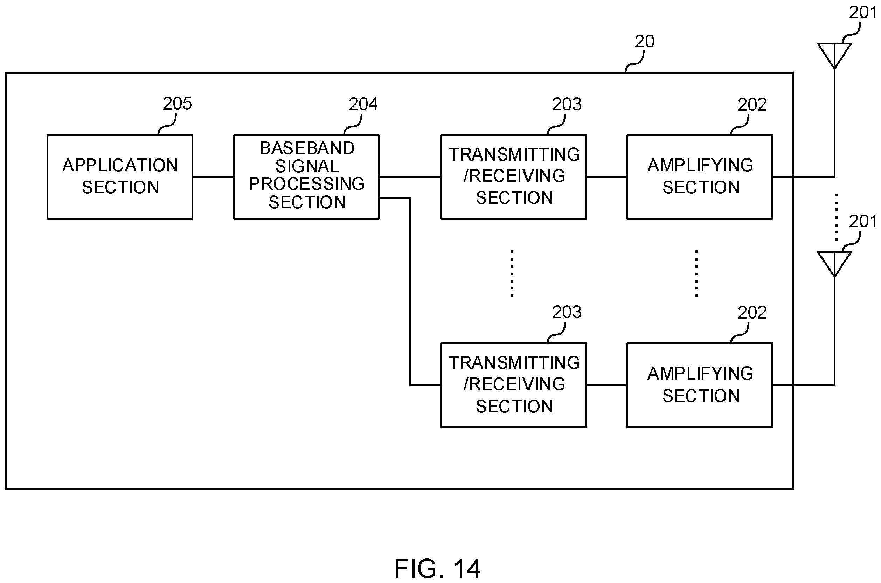

FIG. 14 is a diagram to show an example of an overall structure of a user terminal according to one embodiment of the present invention. A user terminal 20 has a plurality of transmitting/receiving antennas 201 for MIMO communication, amplifying sections 202, transmitting/receiving sections 203, a baseband signal processing section 204 and an application section 205. Note that the transmitting/receiving sections 203 may be composed of transmitting sections and receiving sections.

Radio frequency signals that are received in a plurality of transmitting/receiving antennas 201 are each amplified in the amplifying sections 202. Each transmitting/receiving section 203 receives the downlink signals amplified in the amplifying sections 202. The received signals are subjected to frequency conversion and converted into the baseband signal in the transmitting/receiving sections 203, and output to the baseband signal processing section 204.

The transmitting/receiving sections (receiving sections) 203 receive DL signals (for example, downlink control information, downlink data) transmitted from the radio base station. In addition, the transmitting/receiving sections (receiving sections) 203 transmit uplink control information and uplink data in response to DL signals that are received. For the transmitting/receiving sections 203, transmitters/receivers, transmitting/receiving circuits or transmitting/receiving devices that can be described based on common understanding of the technical field to which the present invention pertains can be used.

In the baseband signal processing section 204, the baseband signal that is input is subjected to an FFT process, error correction decoding, a retransmission control receiving process, and so on. Downlink user data is forwarded to the application section 205. The application section 205 performs processes related to higher layers above the physical layer and the MAC layer, and so on. Furthermore, in the downlink data, broadcast information is also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, pre-coding, a discrete Fourier transform (DFT) process, an IFFT process and so on, and the result is forwarded to each transmitting/receiving section 203. The baseband signal that is output from the baseband signal processing section 204 is converted into a radio frequency band in the transmitting/receiving sections 203. The radio frequency signals that are subjected to frequency conversion in the transmitting/receiving sections 203 are amplified in the amplifying sections 202, and transmitted from the transmitting/receiving antennas 201.

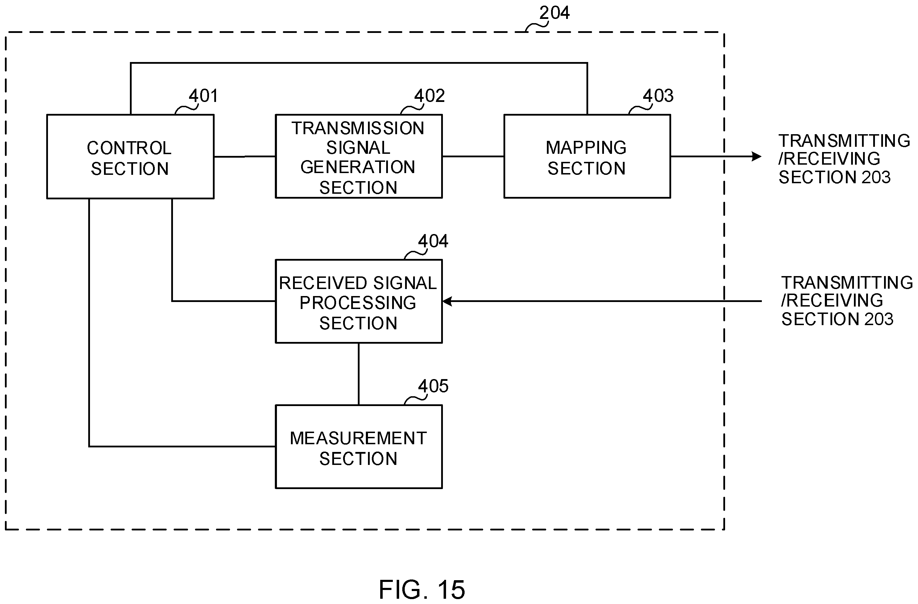

FIG. 15 is a diagram to show an example of a functional structure of a user terminal according to the present embodiment. Note that, although FIG. 15 primarily shows functional blocks that pertain to characteristic parts of the present embodiment, the user terminal 20 has other functional blocks that are necessary for radio communication as well. As shown in FIG. 15, the baseband signal processing section 204 provided in the user terminal 20 has a control section 401, a transmission signal generating section 402, a mapping section 403, a received signal processing section 404 and a measurement section 405.

The control section 401 controls the whole of the user terminal 20. For the control section 401, a controller, a control circuit or control apparatus that can be described based on general understanding of the technical field to which the present invention pertains can be used. The control section 401, for example, controls the generation of uplink signals in the transmission signal generation section 402, the allocation of signals by the mapping section 403, and so on. Furthermore, the control section 401 controls the receiving processes of downlink signals in the received signal processing section 404, the measurements of signals in the measurement section 405, and so on.

The control section 401 acquires the downlink control signals (signals transmitted in the PDCCH/EPDCCH) and downlink data signals (signals transmitted in the PDSCH) transmitted from the radio base station 10, via the received signal processing section 404. The control section 401 controls the generation of uplink control signals (for example, delivery acknowledgement signals (HARQ-ACKs) and so on) and uplink data signals based on the downlink control signals, the results of deciding whether or not re transmission control is necessary for the downlink data signals, and so on.

The control section 401 applies listening to UL communication in LAA cells. To be more specific, the control section 401 controls the condition for UL listening and the UL channel occupation period, which is configured after UL listening, depending on the type of UL channel. If the UL channel is the PUCCH, the first listening condition, which does not apply random backoff to UL listening, is used. Also, when the UL channel is the PUSCH, UL listening is performed based on a predetermined condition reported from the radio base station 10. The predetermined condition is determined based on the condition for DL listening that is executed in the radio base station 10 before a UL grant to command PUSCH transmission is transmitted. Furthermore, when a UL grant to command transmission of the PUSCH is transmitted from a cell where DL listening is not configured, a second listening condition, which applies random backoff to UL listening, is used.

When communication is performed using an LAA cell which does not employ listening and a cell in which listening is not configured, the control section 401 exerts control so that uplink control information is transmitted without using an uplink shared channel (for example, the PUSCH of an LAA SCell) where transmission is controlled based on the result of listening. That is, the control section 401 exerts control so that uplink control information is transmitted using an uplink channel other than an uplink shared channel where transmission is controlled based on the result of listening (for example, another cell's uplink channel).

For example, when the transmission timing of uplink control information overlaps the transmission timing of an uplink shared channel where transmission is controlled based on the result of listening, the control section 401 exerts control so that the uplink control information is transmitted using the uplink channel of another cell other than an LAA cell. In this case, the control section 401 may transmit the uplink control information via an uplink control channel of a PCell, a PSCell and/or a PUCCH cell. Furthermore, in this case, the control section 401 exerts control so that an uplink control channel in another cell and an uplink shared channel in the LAA cell are transmitted simultaneously depending on the result of listening in the LAA cell.

Also, when the transmission timing of uplink control information (for example, uplink control information for LAA) and the transmission timing of an uplink shared channel of another cell overlap, the control section 401 exerts control so that uplink control information is transmitted using the uplink shared channel of the other cell.

Also, when the transmission timing of uplink control information and the transmission timing of an uplink channel where transmission is guaranteed in an LAA cell overlap, the control section 401 can perform control so that the uplink control information is transmitted using the uplink channel of the LAA cell. Transmission of the uplink channel where transmission is guaranteed may be transmission of an uplink channel to which LBT is not applied, or transmission of an uplink channel that is transmitted irrespective of the result of LBT.

The transmission signal generation section 402 generates UL signals based on commands from the control section 401, and outputs these signals to the mapping section 403. For example, the transmission signal generation section 402 generates uplink control signals such as delivery acknowledgement signals (HARQ-ACKs), channel state information (CSI) and so on, based on commands from the control section 401.

Also, the transmission signal generation section 402 generates uplink data signals based on commands from the control section 401. For example, when a UL grant is included in a downlink control signal that is reported from the radio base station 10, the control section 401 commands the transmission signal generation section 402 to generate an uplink data signal. For the transmission signal generation section 402, a signal generator, a signal generating circuit or a signal generating device that can be described based on common understanding of the technical field to which the present invention pertains can be used.

The mapping section 403 maps the uplink signals (uplink control signals and/or uplink data) generated in the transmission signal generation section 402 to radio resources based on commands from the control section 401, and output the result to the transmitting/receiving sections 203. For the mapping section 403, mapper, a mapping circuit or a mapping device that can be described based on common understanding of the technical field to which the present invention pertains can be used.

The received signal processing section 404 performs receiving processes (for example, demapping, demodulation, decoding and so on) of received signals that are input from the transmitting/receiving sections 203. Here, the received signals are, for example, downlink signals transmitted from the radio base station 10. The received signal processing section 404 can be constituted by a signal processor, a signal processing circuit or signal processing apparatus that can be described based on general understanding of the technical field to which the present invention pertains. Also, the received signal processing section 404 can constitute the receiving section according to the present invention.

The received signal processing section 404 outputs the decoded information, acquired through the receiving processes, to the control section 401. The received signal processing section 404 outputs, for example, broadcast information, system information, RRC signaling, DCI and so on, to the control section 401. Also, the received signal processing section 404 outputs the received signals, the signals after the receiving processes and so on, to the measurement section 405.

The measurement section 405 conducts measurements with respect to the received signals. The measurement section 405 can be constituted by a measurer, a measurement circuit or measurement apparatus that can be described based on general understanding of the technical field to which the present invention pertains.

The measurement section 405 may execute LBT in a carrier where LBT is configured (for example, in an unlicensed band) based on commands from the control section 401. The measurement section 405 may output the results of LBT (for example, judgments as to whether the channel state is idle or busy) to the control section 401.

Also, the measurement section 405 measures RRM and CSI according to commands from the control section 401. For example, the measurement section 405 measures CSI using measurement reference signals (the CRS, the CSI-RS, the CRS included in the DRS or the CSI-RS for CSI measurements arranged in DRS-transmitting subframes). The measurement results are output to the control section 401 and transmitted from the transmitting/receiving sections 103 using the PUSCH or the PUCCH.

### <Hardware Structure>

Note that the block diagrams that have been used to describe the above embodiments show blocks in functional units. These functional blocks (components) may be implemented in arbitrary combinations of hardware and/or software. Also, the means for implementing each functional block is not particularly limited. That is, each functional block may be implemented with 1 piece of physically-integrated apparatus, or may be implemented by connecting 2 physically-separate pieces of apparatus via radio or wire and by using these multiple pieces of apparatus.

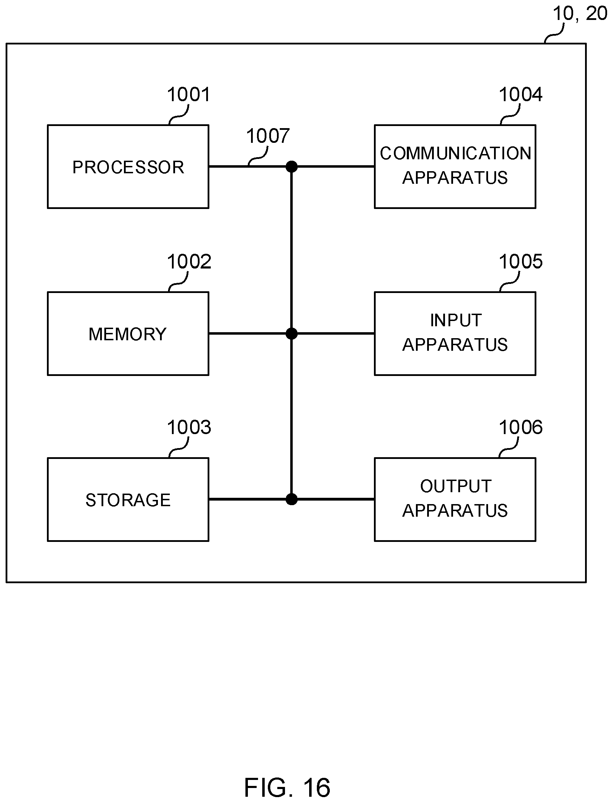

For example, the radio base station, user terminals and so on according to embodiments of the present invention may function as a computer that executes the processes of the radio communication method of the present invention. FIG. 16 is a diagram to show an example hardware structure of a radio base station and a user terminal according to one embodiment of the present invention. Physically, the above-described radio base stations 10 and user terminals 20 may be formed as a computer apparatus that includes a processor 1001, a memory 1002, a storage 1003, communication apparatus 1004, input apparatus 1005, output apparatus 1006 and a bus 1007.

Note that, in the following description, the word "apparatus" may be replaced by "circuit," "device," "unit" and so on. Note that the hardware structure of a radio base station 10 and a user terminal 20 may be designed to include one or more of each apparatus shown in the drawings, or may be designed not to include part of the apparatus.

Each function of the radio base station 10 and the user terminal 20 is implemented by reading predetermined software (program) on hardware such as the processor 1001 and the memory 1002, and by controlling the calculations in the processor 1001, the communication in the communication apparatus 1004, and the reading and/or writing of data in the memory 1002 and the storage 1003.

The processor 1001 may control the whole computer by, for example, running an operating system. The processor 1001 may be configured with a central processing unit (CPU), which includes interfaces with peripheral apparatus, control apparatus, computing apparatus, a register and so on. For example, the above-described baseband signal processing section 104 (204), call processing section 105 and so on may be implemented by the processor 1001.

Furthermore, the processor 1001 reads programs (program codes), software modules or data, from the storage 1003 and/or the communication apparatus 1004, into the memory 1002, and executes various processes according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), a RAM (Random Access Memory) and so on. The memory 1002 may be referred to as a "register," a "cache," a "main memory (primary storage apparatus)" and so on. The memory 1002 can store executable programs (program codes), software modules and/or the like for implementing the radio communication methods according to embodiments of the present invention.

The storage 1003 is a computer-readable recording medium, and is configured with at least one of an optical disk such as a CD-ROM (Compact Disc ROM), a hard disk drive, a flexible disk, a magneto-optical disk, a flash memory and so on. The storage 1003 may be referred to as "secondary storage apparatus."

The communication apparatus 1004 is hardware (transmitting/receiving device) for allowing inter-computer communication by using wired and/or wireless networks, and may be referred to as, for example, a "network device," a "network controller," a "network card," a "communication module" and so on. For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, etc.). The output apparatus 1006 is an output device for sending output to the outside (for example, a display, a speaker, etc.). Note that the input apparatus 1005 and the output apparatus 1006 may be provided in an integrated structure (for example, a touch panel).

Furthermore, these types of apparatus, including the processor 1001, the memory 1002 and others, are connected by a bus 1007 for communicating information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one piece of the hardware.

Note that the terminology used in this specification and the terminology that is needed to understand this specification may be replaced by other terms that convey the same or similar meanings. For example, "channels" and/or "symbols" may be replaced by "signals" (or "signaling"). Also, "signals" may be "messages." Furthermore, a "component carrier" (CC) may be referred to as a "cell," a "frequency carrier," a "carrier frequency" and so on.

Furthermore, a radio frame may be comprised of one or more periods (frames) in the time domain. Each of one or more periods (frames) constituting a radio frame may be referred to as a "subframe." Furthermore, a subframe may be comprised of one or more slots in the time domain. Furthermore, a slot may be comprised of 1 or multiple symbols (OFDM symbols, SC-FDMA symbols, etc.) in the time domain.

A radio frame, a subframe, a slot and a symbol all represent the time unit in signal communication. A radio frames, a subframe, a slot and a symbol may be each called by other applicable names. For example, one subframe may be referred to as a "transmission time interval (TTI)," or a plurality of consecutive subframes may be referred to as a "TTI," and one slot may be referred to as a "TTI." That is, a subframe and a TTI may be a subframe (one ms) in existing LTE, may be a shorter period than one ms (for example, one to thirteen symbols), or may be a longer period of time than one ms.

Here, a TTI refers to the minimum time unit of scheduling in wireless communication, for example. For example, in LTE systems, a radio base station schedules the allocation of radio resources (such as the frequency bandwidth and transmission power that can be used by each user terminal) for each user terminal in TTI units. The definition of TTIs is not limited to this.

A resource block (RB) is a resource allocation unit in the time domain and the frequency domain, and may include one or a plurality of consecutive subcarriers in the frequency domain. Also, an RB may include one or more symbols in the time domain, and may be one slot, one subframe or one TTI in length. One TTI and one subframe each may be comprised of one or more resource blocks. Note that an RB may be referred to as a "physical resource block (PRB: Physical RB)," a "PRB pair," an "RB pair," or the like.

Furthermore, a resource block may be comprised of one or more resource elements (REs). For example, one RE may be a radio resource field of one subcarrier and one symbol.

Note that the above-described structures of radio frames, subframes, slots, symbols and so on are merely examples. For example, configurations such as the number of subframes included in a radio frame, the number of slots included in a subframe, the number of symbols and RBs included in a slot, the number of subcarriers included in an RB, the number of symbols in a TTI, the symbol duration and the cyclic prefix (CP) length can be variously changed.

Also, the information and parameters described in this specification may be represented in absolute values or in relative values with respect to predetermined values, or may be represented in other information formats. For example, radio resources may be specified by predetermined indices.

The information, signals and/or others described in this specification may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, software, commands, information and so on may be transmitted and received via communication media. For example, when software is transmitted from a website, a server or other remote sources by using wired technologies (coaxial cables, optical fiber cables, twisted-pair cables, digital subscriber lines (DSL) and so on) and/or wireless technologies (infrared radiation and microwaves), these wired technologies and/or wireless technologies are also included in the definition of communication media.

Furthermore, the radio base stations in this specification may be interpreted as user terminals. For example, each aspect/embodiment of the present invention may be applied to a configuration in which communication between a radio base station and a user terminal is replaced with communication among a plurality of user terminals (D2D: Device-to-Device). In this case, user terminals 20 may have the functions of the radio base stations 10 described above. In addition, wording such as "uplink" and "downlink" may be interpreted as "side." For example, an uplink channel may be interpreted as a side channel.

Likewise, the user terminals in this specification may be interpreted as radio base stations. In this case, the radio base stations 10 may have the functions of the user terminals 20 described above.

The examples/embodiments illustrated in this specification may be used individually or in combinations, which may be switched depending on the mode of implementation. Also, predetermined information (for example, reporting of information to the effect that "X holds") does not necessarily have to be reported explicitly, and can be reported in an implicit manner (by, for example, not reporting this piece of information).

Reporting of information is by no means limited to the examples/embodiments described in this specification, and other methods may be used as well. For example, reporting of information may be implemented by using physical layer signaling (for example, DCI (Downlink Control Information), UCI (Uplink Control Information)), higher layer signaling (for example, RRC (Radio Resource Control) signaling, broadcast information (the MIB (Master Information Block) and SIBs (System Information Blocks) and so on) and MAC (Medium Access Control) signaling, other signals or combinations of these. Also, RRC signaling may be referred to as "RRC messages," and can be, for example, an RRC connection setup message, RRC connection reconfiguration message, and so on. Also, MAC signaling may be reported using, for example, MAC control elements (MAC CEs (Control Elements)).

The aspects/embodiments illustrated in this specification may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate systems and/or next-generation systems that are enhanced based on these.

The order of processes, sequences, flowcharts and so on that have been used to describe the aspects/embodiments herein may be re-ordered as long as inconsistencies do not arise. For example, although various methods have been illustrated in this specification with various components of steps in exemplary orders, the specific orders that are illustrated herein are by no means limiting.

Now, although the present invention has been described in detail above, it should be obvious to a person skilled in the art that the present invention is by no means limited to the embodiments described herein. For example, the above-described embodiments may be used individually or in combinations. The present invention can be implemented with various corrections and in various modifications, without departing from the spirit and scope of the present invention defined by the recitations of claims. Consequently, the description herein is provided only for the purpose of explaining example s, and should by no means be construed to limit the present invention in any way.

The disclosure of Japanese Patent Application No. 2016-073410, filed on March 31, 2016, including the specification, drawings and abstract, is incorporated herein by reference in its entirety.

## Claims

1. A user terminal comprising:
a transmission section that transmits uplink control information in a predetermined UL channel; and
a control section that controls UL transmission based on UL listening that is applied before the UL transmission,
wherein the control section controls a condition for the UL listening and a UL channel occupation period, which is configured after the UL listening, depending on the type of the UL channel.

2. The user terminal according to claim 1, wherein, when the UL channel is an uplink control channel, the control section applies a first listening condition that does not apply random backoff to the UL listening.

3. The user terminal according to claim 1, wherein, when the UL channel is an uplink shared channel, the control section performs the UL listening based on a predetermined condition indicated from a radio base station.

4. The user terminal according to claim 3, wherein the predetermined condition is determined based on a condition for DL listening that is performed by the radio base station before a UL grant, which indicates transmission of the uplink shared channel, is transmitted.

5. The user terminal according to claim 3, wherein, when a UL grant to indicate transmission of the uplink shared channel is transmitted from a cell where DL listening is not configured, the control section applies a second listening condition that applies random backoff to the UL listening.

6. A radio base station comprising:
a transmission section that transmits a DL signal, which includes a UL grant, to a user terminal; and
a control section that controls transmission of the DL signal based on a result of DL listening, which is executed before the DL signal is transmitted,
wherein the transmission section that reports conditions for UL listening performed at the user terminal before UL transmission indicated by the UL grant according to a condition applied to the DL listening.

7. A radio commutation method for a user terminal in a cell in which listening is executed before transmission, the radio communication method comprising the steps of:
transmitting uplink control information in a predetermined UL channel; and
controlling transmission based on UL listening that is applied before the UL transmission,
wherein a condition for the UL listening and a UL channel occupation period, which is configured after the UL listening, are controlled depending on the type of the UL channel.
